Europäisches Patentamt

**European Patent Office**

Office européen des brevets

(11) Publication number:

# 0 212 336
B1

(12) EUROPEAN PATENT SPECIFICATION

(45) Date of publication of the patent specification:
28.11.90

(51) Int. Cl.⁵: **G11B 7/24**

(21) Application number: **86110279.6**

(22) Date of filing: **25.07.86**

(54) A method of optical recording.

(30) Priority: **15.08.85 US 766160**

(43) Date of publication of application:
**04.03.87 Bulletin 87/10**

(45) Publication of the grant of the patent:
**28.11.90 Bulletin 90/48**

(84) Designated Contracting States:
**DE FR GB IT**

(56) References cited:
**EP-A- 0 050 047**
**EP-A- 0 135 370**
**EP-A- 0 142 968**
**EP-A- 0 173 523**

(73) Proprietor: **International Business Machines Corporation, Old Orchard Road, Armonk, N.Y. 10504(US)**

(72) Inventor: **Barton, Roger Westwood, 521 Benvenue Avenue, Los Altos CA 94022(US)**
Inventor: **Chen, Martin Yu-Wen, 7198 Silver Load Lane, San Jose CA 95120(US)**
Inventor: **Davis, Charles Raymond, 2857 Silver Estates, San Jose CA 95135(US)**
Inventor: **Lim, Grace Su, 3696 Deedham Drive, San Jose CA 95148(US)**
Inventor: **Marrello, Vincent Nmn, 117 Cheltenham Way, San Jose CA 95139(US)**
Inventor: **Rubin, Kurt Allan, 265 W Portola Avenue, Los Altos CA 94022(US)**

(74) Representative: **Burt, Roger James, Dr., IBM United Kingdom Limited Intellectual Property Department Hursley Park, Winchester Hampshire SO21 2JN(GB)**

## Description

This invention relates to a method of optical recording.

US-A-3,530,441 describes the use of transitions between amorphous and crystalline states in a semiconductor material to store information. An example of a memory semiconductor material contains about 85% tellurium and 15% gemanium in atomic percent with inclusions of some oxygen and/or sulfur. The state of these amorphous materials can be changed by applying electrical, optical or thermal energy thereto. In one state such material has a so-called non-crystalline or amorphous bulk structure which has a low optical density. In the other state the material has a crystalline structure which has a relatively high optical density.

US-A-3,971,874 describes the use of a transition between amorphous and crystalline states in a tellurium oxide film. Again, the non-crystalline structure has a low optical density and the crystalline structure has a relatively high optical density. US-A-4,091,171 describes a transition between amorphous and crystalline states in Ge, Sn, Sb, Tl, Bi and Mo sub-oxide. US-A-4,278,734 covers transitions between amorphous and crystalline states in metal or semi-metal sub-oxide. In all of the foregoing documents, the change in optical density occurs when the phase changes from amorphous to crystalline.

In the 'phase change' scheme for optical recording in the systems described in the aforementioned documents, a laser beam is used to heat a material and switch it alternately between an amorphous and a crystalline state. Typically, a short intense laser pulse, for example, pulse of 12 mW power and 50 nsec duration, is used for writing which melts the material and allows it to quench into an amorphous or an atomically disordered state.

For erasing, a longer pulse, for example, of 4 mW power and 10 $\mu$sec duration, is empoyed, allowing the material to relax into its lower energy crystalline state.

EP-A-01 35 370 discloses an optical recording film having a composition expressed by the formula:

$M_x Te_y Se_z O_a$

where $2 \leq x \leq 40$, $30 \leq y \leq 95$, $3 \leq x \leq 45$, $0 \leq \alpha \leq 20$ and M is at least one As, Sb, Bi, S, Si, Ge, Sn, Pb, $A\ell$, Ga, In, $T\ell$, Zn, Cd, Au, Ag, Cu, Ni, Pd, Rh, Cr, Mo, W and Ta.

EP-A-01 42 968 discloses an optical recording medium comprising 20 to 60 atom % oxygen and tellurium, germanium and/or tin.

EP-A-01 73 523 discloses an optical recording medium comprising a chemically stable dielectric material and a semiconductor material comprising at least one of Ge, Te and InSb which undergoes a phase transition between amorphous structure and crystalline structure when exposed to light.

EP-A-00 50 047 discloses an optical recording film containing Te and Se and, optionally, at least one other element.

The erasing step for a particular medium is commonly characterised by the minimum pulse width of the laser beam required for crystallisation. With prior art materials, the minimum crystallisation pulse width for erasing is between 1,000 ns and 80,000 ns. In typical optical recording systems a disk is coated with a film of storage material. Since the disk is rotated with a velocity of at least 4 microns per microsecond, an elliptical beam is required in order that each micron sized spot be subjected to sufficient exposure time for erasure. A material with a 1000 ns minimum crystallisation pulse width requires a 4 micron pulse length. As a result, prior art systems require 2 laser beams, one laser beam of 1 micron size for writing purpose and a second elliptical beam > 4 microns for erasing purpose.

This invention seeks to provide an improved method of recording. A method of optical recording comprises, according to the invention, the steps of
(1) depositing a film of a material which has a crystallisation temperature between 100°C and 400°C and which can be switched between the amorphous and the crystalline states where both states are substantially of a single phase with the same stoichiometric ratio, said amorphous state and said crystalline state having different optical properties, and
(2) heating a spot in said film with a laser beam with controlled pulse duration and intensity to melt the material in said spot, whereby cessation of the laser radiation causes the material in said spot to quench at a suitable rate to produce the desired state; the method being characterised by the material being selected from the group consisting of $(TeGe)_{85}Sn_{15}$ or $(TeGe)_{1-x}Sn_x$, where x is from 0.1 to 0.25 or $(InSb)_{100-x}Ge_x$, where x is between 0 and 10 or $(Ga_{100-x}In_x)_{50}Sb_{50}$, where x is between 0 and 100.

The spot on the film which is heated is typically from 20 to 100 nm thick.

Preferably the materials have the ability to crystallise in <300 ns. Materials which can be erased in <300 ns can be erased in a single pass using a 1$\mu$m laser beam. Thus, only one laser, providing a 1$\mu$m circular spot, is needed in the recording head. With slower erasing materials the erase beam spot must be elliptical; that means that there is need for incorporating two lasers in the recorder head. The simplicity and cost advantage of a one-laser head over a two-laser head is enormous.

Alternatively, two laser beams may be employed in the recording head: one for erasure and one for writing. When the recording material can be erased in less than 300 nsec, then each beam need only be 1$\mu$m in width. These two beams can be produced simultaneously in an inexpensive laser diode array. With slower erasing materials, the erase beam must be elliptical and the optical head must incorporate 2 separate laser beams. This adds considerable complexity and cost to the design of the recording system.

The other requirement for a material besides a short erase time is that the material must be stable in the amorphous state, i.e the material must have a relatively high crystallisation temperature such as above 100°C. If the materials crystallise at temperatures below 80°C they are unacceptable, whereas if they crystallise between 100°C and 400°C they can have the desired stability.

Materials for use in the process of the present invention include, for example, GeTe, GeTe with small amounts of additional elements (such as $(GeTe)_{85}Sn_{15}$), GeTe with isoelectronic substitutions (such as $Te_{50}Ge_{(50-x)}Sn_x$ or $Te_{50}Ge_{(50-x)}Si_x$) where x is from 10 to 25, InSb, $(InSb)_{100-x}Ge_x$, where x is between 0 and 10, $In_xGa_{(50-x)}Sb_{50}$, $Sb_2Se$, $Sb_{(100-x)}Se_x$ is between 0 and 40, any of the following: SnTe, PbTe, SbSe, $Sb_2Se_3$, $Bi_2Se$, BiSe, $Bi_2Se_3$, $Bi_2Te$, BiTe, $Bi_2Te_3$, $Sb_2Te$, SbTe, $Sb_2Te_3$, $TeSi$, $Ag_2Se$, $AgSe_2$, $Ag_2Te$, $Ag_3Te_2$, $AgTe_2$, $Au_2Se_3$, $AuTe_2$, GeSe.

The material $(GeTe)_{85}Sn_{15}$ has been deposited on 200 mn polymethylmethacrylate (PMMA) substrates and tested for its suitability as an optical recording medium. The active layer was typically 75 nm thick and sandwiched between 250 nm layers of ZnS or 7059 (Corning) glass used for ablation protection and thermal isolation. 2.5 MHz carrier signals were recorded on this disk and, on playback, showed carrier to noise levels of up to 56 dB (using 30 kHz bandwidth). The laser pulses employed for writing were 18 mW in power, 55 nsec in duration, and one micrometer in width. These signals could be completely erased in one disk revolution with a DC laser beam of 10 mW power focussed to the same one micron spot. With disk rotations of 600 rpm, the dwell time of the laser spot on the medium was as short as 200 nsec. The tracks could be repeatedly written and erased 1000 times with no degradation in signal to noise ratio. One micro spots written onto glass coupon samples were subjected to heat stress tests. No degradation in spot size was observed after 6 months in 110 degrees centigrade. The active layer $(GeTe)_{85}Sn_{15}$, then, is an amorphous to crystalline 'phase change' optical recording medium that has very very good data stability combined with extremely short erase time.

## Claims

1. A method of optical recording comprising the steps of
(1) depositing a film of a material which has crystallisation temperature between 100°C and 400°C and which can be switched between the amorphous and the crystalline states where both states are substantially of a single phase with the same stoichiometric ratio, said amorphous state and said crystalline state having different optical properties, and
(2) heating a spot in said film with a laser beam with controlled pulse duration and intensity to melt the material in said spot, whereby cessation of the laser radiation causes the material in said spot to quench at a suitable rate to produce the desired state; the method being characterised by
the material being selected form the group consisting of $(TeGe)_{85}Sn_{15}$ or $(TeGe)_{100-x}Sn_x$, where x is from 10 to 25 $(InSb)_{100-x}Ge_x$, where x is between 0 and 10 or $(Ga_{100-x}In_x)_{50}Sb_{50}$, where x is between 0 and 100.

## Patentansprüche

1. Verfahren optischer Aufzeichnung, folgende Schritte enthaltend:
(1) Aufbringen eines Films aus einem Material mit einer Kristallisierungstemperatur zwischen 100°C und 400°C und das den Wechsel zwischen dem amorphen und dem kristallinen Zustand gestattet, wobei beide Zustände im wesentlichen eine einzige Phase mit dem gleichen stoechiometrischen Verhältnis aufweisen, und der besagte amorphe Zustand und der besagte kristalline Zustand verschiedene optische Eigenschaften aufweisen, und
(2) Erhitzen eines Punktes in dem besagten Film mit einem Laserstrahl mit kontrollierter Impulsdauer und -stärke, um das Material im besagten Punkt zu schmelzen, wobei nach Abbruch der Laserstrahlung das Material im besagten Flecken in einer geeigneten Geschwindigkeit abgeschreckt wird, um den gewünschten Zustand zu erzeugen; Verfahren gekennzeichnet durch
das Material, das aus der Gruppe $(TeGe)_{85}Sn_{15}$ oder $(TeGe)_{100-x}Sn_x$, gewählt wird, wo x von 10 bis 25 reicht, oder $(InSb)_{100-x}Ge_x$, wo x von 0 bis 10 reicht oder $(Ga_{100-x}In_x)_{50}Sb_{50}$, wo x eine Zahl von 0 bis 100 ist.

## Revendications

1. Procédé d'enregistrement optique comprenant les opérations de:
(1) dépôt d'un film d'une matière qui a une température de cristallisation comprise entre 100°C et 400°C et qui peut être commutée entre l'état amorphe et l'état cristallin, les deux états étant sensiblement d'une phase unique avec le même rapport stoechiométrique, ledit état amorphe et ledit état cristallin ayant des propriétés optiques différentes, et
(2) chauffage d'un point dudit film avec un faisceau laser de durée et intensité d'impulsion réglées pour fondre la matière audit point, de sorte que la cessation du rayonnement laser entraîne le refroidissement de la matière dans ledit point à une vitesse appropriée pour produire l'état désiré; le procédé étant caractérisé en ce que
la matière est choisie dans le groupe comprenant $(TeGe)_{85}Sn_{15}$ ou $(TeGe)_{100-x}Sn_x$, où x est compris entre 10 et 25, ou $(InSb)_{100-x}Ge_x$, où x est compris entre 0 et 10, ou $(Ga_{100-x}In_x)_{50}Sb_{50}$, où x est compris entre 0 et 100.